# EUROPÄISCHE PATENTSCHRIFT

(11) **EP 1 025 571 B1**
(45) Veröffentlichungstag und Bekanntmachung des Hinweises auf die Patenterteilung: **30.01.2002**
(21) Anmeldenummer: 98958809.0
(22) Anmeldetag: 10.10.1998
(51) Int. Cl.: H01H 1/58, H01H 11/00, H02B 1/044, B60R 16/02

(54) **SCHALTER UND SCHALTERANORDNUNG FÜR EIN KRAFTFAHRZEUG**
SWITCH AND SWITCH DEVICE FOR A MOTOR VEHICLE
COMMUTATEUR ET DISPOSITIF DE COMMUTATION POUR VEHICULE AUTOMOBILE

(30) Priorität: 25.10.1997 DE 19747259
(43) Veröffentlichungstag der Anmeldung: 09.08.2000
(73) Patentinhaber: Marquardt GmbH, 78604 Rietheim-Weilheim (DE)
(72) Erfinder: BARTHEL, Klaus, D-78604 Rietheim-Weilheim (DE); HAFEN, Reinhold, D-78583 Böttingen (DE); MÜLLER, Karl, D-78628 Rottweil (DE)
(74) Vertreter: Otten, Herbert
(86) Internationale Anmeldenummer: DE9803000
(87) Internationale Veröffentlichungsnummer: WO9922389

(56) Entgegenhaltungen:
- DE-A- 2 702 264
- DE-A- 3 137 975
- DE-A- 4 302 032
- DE-A- 19 548 216
- US-A- 5 262 602
- US-A- 5 523 633

## Beschreibung

Die Erfindung betrifft einen elektrischen Schalter nach dem Oberbegriff des Patentanspruchs 1.

In Kraftfahrzeugen werden elektrische Schalter als Bedienschalter zum Ein- und Ausschalten der Kraftfahrzeugbeleuchtung, der Scheibenwischer, der Heckscheibenheizung, der elektrischen Fensterheber, der Innenzentralverriegelung oder für sonstige Funktionen verwendet. Mehrere solcher Schalter können als Bedienfelder im Armaturenbrett, in der Mittelkonsole o. dgl. zusammengefaßt sein.

Zur Verwendung in Kraftfahrzeugen geeignete Bedienschalter sind beispielsweise aus der DE 31 37 975 C2 oder DE 195 48 216 A1 bekannt. Solche elektrische Schalter besitzen ein Kontaktsystem zum Schalten einer elektrischen Spannung. Die elektrische Spannung wird an elektrischen Anschlüssen angelegt, die zum Kontaktsystem führen.

Zum einen werden Bedienschalter verwendet, die direkt die Spannungsversorgung des jeweils zu schaltenden Geräts im Kraftfahrzeug schalten. Bei entsprechenden Geräten können dabei hohe Ströme von ca. 10 bis 15 Ampere über das Kontaktsystem des Schalters fließen. Beispielsweise kann die Spannung für die Scheinwerfer der Kraftfahrzeugbeleuchtung direkt geschaltet werden. Solche Schalter müssen daher zum Schalten hoher Leistungsströme geeignet sein.

In vermehrtem Maße werden zum anderen auch Bedienschalter eingesetzt, die zur Anwahl von einzelnen Funktionen eines Steuergeräts dienen, das seinerseits dann die entsprechenden elektrischen Geräte schaltet. Diese Schalter dienen zur Erzeugung von Schaltsignalen, bei denen lediglich geringe Ströme von ca. 10 Milliampere fließen. Beispielsweise kann es sich hier um die Anwahl der Innenverriegelung an der Zentralverriegelung für die Türen, die Steuerung des Bordcomputers usw. handeln. Solche Schalter sind somit zum Schalten von niedrigen Signalströmen ausgelegt.

Die zum Schalten von Leistungsströmen ausgelegten Schalter sind zum Schalten von Signalströmen ungeeignet, wie es auch umgekehrt der Fall ist. Es ist bei Verwendung derartiger Schalter daher notwendig, je nach Funktion unterschiedliche Schaltertypen im Kraftfahrzeug vorzusehen. Dies verteuert die Lagerhaltung und verkompliziert die Montage, wobei Montagefehler nicht auszuschließen sind.

Aus der US-A-5 262 602 ist weiter ein elektrischer Schalter mit einem Kontaktsystem bekannt, das sowohl zum Schalten eines hohen Leistungstroms sowie eines niedrigen Signalstroms ausgelegt ist. Hierfür weist das Kontaktsystem große Kontaktflächen mit Goldkontakten auf, um den Kontaktwiderstand zu kompensieren. Im Gehäuse des Schalters befinden sich mehrere Kontaktsysteme, wobei zu jedem Kontaktsystem elektrische Anschlüsse für jeweils einen einzigen Stromkreis führen. Da Leistungs- und Signalstromkreise im allgemeinen mit unterschiedlichen Steckern zur Verbindung mit dem Schalter ausgestattet sind, ist entsprechend der Art des Stromkreises die Schaltfunktion des Schalters wiederum festgelegt. Eine wahlweise Verbindung des Schalters je nach Bedarf mit einem Leistungs- und/oder Signalstromkreis ist bei diesem Schalter somit nicht vorgesehen.

Insbesondere muß dadurch in Bedienfeldern von vorneherein festgelegt werden, mit welcher Art von Anschluß der Schalter an der jeweiligen Stelle im Bedienfeld zu versehen ist, so daß je nach gewünschter Fahrzeugausstattung eine Vielzahl von Varianten bereit zu halten ist. Im übrigen sind als Busknoten an ein Bussystem ankoppelbare Bedienfelder für Kraftfahrzeuge, die mehrere herkömmliche elektrische Schalter enthalten, aus der DE-A-43 02 032 bekannt.

Der Erfindung liegt ausgehend von der US-A-5 262 602 die Aufgabe zugrunde, einen elektrischen Schalter anzugeben, der wahlweise mit Leistungs- und/oder Signalspannung verbindbar ist. In einer Erweiterung soll die Variantenbildung für Bedienfelder vereinfacht werden.

Diese Aufgabe wird bei einem elektrischen Schalter durch die Merkmale des Anspruchs 1 gelöst.

Der erfindungsgemäße Schalter besitzt erste elektrische Anschlüsse zur Versorgung des Kontaktsystems mit einer Leistungsspannung sowie zweite elektrische Anschlüsse zur Versorgung des Kontaktsystems mit einer Signalspannung. Wahlweise ist bei Bedarf ein Anschluß zur Zuführung von Leistungsstrom über die ersten elektrischen Anschlüsse und/oder von Signalstrom über die zweiten elektrischen Anschlüsse ermöglicht. Weitere Ausgestaltungen der Erfindung sind Gegenstand der Unteransprüche.

So kann das Betätigungsorgan des Schalters als Wippe ausgebildet sein. Beispielsweise können zwei Kontaktsysteme im Gehäuse des Schalters angeordnet sein. In der einen betätigten Stellung wirkt die Wippe dann auf das eine Kontaktsystem ein, um dieses in den eingeschalteten Zustand zu bringen. In der anderen betätigten Stellung bringt die Wippe das andere Kontaktsystem in den eingeschalteten Zustand. Falls gewünscht, kann das eine Kontaktsystem zum Schalten der Leistungsspannung und das andere Kontaktsystem zum Schalten der Signalspannung dienen.

Das Gehäuse des Schalters kann auf einer Leiterplatte befestigt sein, auf der sich die Zuleitungen für die Signalspannung befinden, die wiederum wahlweise mit den zweiten elektrischen Anschlüssen des Schalters kontaktierbar sind. Im Gehäuse des Schalters stehen die zweiten elektrischen Anschlüsse bevorzugterweise über eine Platine mit dem Kontaktsystem in elektrischer Verbindung. Auf dieser Platine können auch Leuchtmittel für die Funktions- und/oder Symbolbeleuchtung am Betätigungsorgan angeordnet sein. Die Spannungsversorgung für den Betrieb der Leuchtmittel erfolgt ebenfalls über die zweiten elektrischen Anschlüsse.

Die mittels der zugeführten Signal Spannung sowie entsprechend der Schaltstellung des Kontaktsystems vom Schalter erzeugten Schaltsignale sind gemäß einer Ausgestaltung über Signalleitungen zu einer auf der Leiterplatte befindlichen Steuerschaltung übertragbar. In der Steuerschaltung können dann die Schaltsignale in Bussignale, beispielsweise in CAN-Bussignale, umgewandelt und auf eine Busleitung übertragen werden.

In einer Weiterbildung befindet sich an der Unterseite des Gehäuses, in dessen mittleren Bereich eine Aufnahme, die die ersten elektrischen Anschlüsse derart umfaßt, daß ein Stecker zur Zuführung der Leistungsspannung wahlweise aufsteckbar ist.

In der Leiterplatte befindet sich wiederum eine zu der Aufnahme korrespondierende Öffnung, deren Form und Größe das Hindurchführen des Steckers gestattet. Die zweiten elektrischen Anschlüsse sind ebenfalls an der Unterseite des Gehäuses befindlich. Insbesondere sind die zweiten elektrischen Anschlüsse dem Rand des Gehäuses zugeordnet sowie benachbart zur Aufnahme angeordnet. Es bietet sich an, die zweiten elektrischen Anschlüsse als Steckaufnahmen auszubilden, die in der Art einer schwimmenden Lagerung mit elektrischen Verbindungsleitungen zur Platine im Gehäuse des Schalters angeordnet sind. Die zweiten elektrischen Anschlüsse sind dann auf zugeordnete Steckkontakte, die auf der Leiterplatte befindlich sind, aufsteckbar.

Das Kontaktsystem des Schalters kann als an sich bekanntes Schnappsystem ausgebildet sein. Bei einem solchen Schnappsystem wirkt das Betätigungsorgan mittels eines Ansatzes auf einen Lagerarm ein, der an einem Anschlußteil bewegbar gelagert ist. Der Schaltkontakt ist wiederum in einem Schneidenlager am Lagerarm bewegbar gelagert. Eine Zugfeder ist einerseits fest im Gehäuse und andererseits im Schaltkontakt eingehängt, so daß der Schaltkontakt wenigstens mit einem an einem weiteren Anschlußteil befindlichen Festkontakt schaltend zusammenwirkt. Falls gewünscht können auch zwei Festkontakte vorhanden sein, zwischen denen der Schaltkontakt in der Art eines Wechslers umschaltet. Die Anschlußteile gehen unter Verlängerung an einer Seite in die ersten elektrischen Anschlüsse über. Wenigstens ein Anschlußteil führt unter Verlängerung an der anderen Seite zur Platine für die elektrische Verbindung mit den zweiten elektrischen Anschlüssen.

Das Kontaktsystem des Schalters ist derart ausgelegt, daß sowohl ein hoher Leistungsstrom als auch ein niedriger Signalstrom geschaltet werden können. In einer besonderen Ausgestaltung der Erfindung bestehen einerseits die kontaktgebenden Teile des Kontaktsystems, nämlich der Schaltkontakt und der Festkontakt, aus einem für Leistungsströme geeigneten Kontaktmaterial und besitzen andererseits einen geringen elektrischen Übergangswiderstand. Zur Verringerung des Übergangswiderstands bietet es sich an, die kontaktgebenden Teile mit einer elektrisch gut leitfähigen Schicht, beispielsweise einer Goldschicht o. dgl., zu versehen. Dadurch tritt bei Verwendung des Schalters zum Schalten von Signalströmen lediglich ein geringer Spannungsabfall am Kontaktsystem auf. Gegebenenfalls kann bei Verwendung des Schalters zum Schalten von Leistungsströmen eine Zerstörung oder Abtragung dieser Schicht unter Erhöhung des Spannungsabfalls am Kontaktsystem auftreten, wobei jedoch aufgrund der höheren Stromstärke bei Leistungsströmen die Funktionsfähigkeit des Schalters nicht weiter beeinträchtigt ist.

Der erfindungsgemäße Schalter wird insbesondere in einer chalteranordnung für ein Bedienfeld im Kraftfahrzeug verwendet. Hierbei ist eine Ausgestaltung des Schalters vorteilhaft, bei der wenigstens ein federelastischer Rastarm am Gehäuse angeordnet ist, so daß der Schalter klemmend und/oder verriegelnd in ein Trägerbauteil einsteckbar ist. umgekehrt ist der Schalter durch Einwirken mittels eines Werkzeuges, Schraubendrehers o. dgl. auf den Rastarm auch wieder entriegelbar sowie aus dem Trägerbauteil herausnehmbar. Dieses Werkzeug besitzt einen mit dem Rastarm korrespondierenden Arm zur Entriegelung des Rastarmes sowie einen an den Arm anschließenden Ansatz zum Einwirken auf die Unterseite des Gehäuses. Dadurch ist der Schalter aus dem Trägerbauteil an der der Unterseite des Gehäuses zugeordneten Seite herausdrückbar.

Im allgemeinen enthält ein Bedienfeld mehrere derartige Schalter, die jeweils zum Schalten und/oder Auslösen von Funktionen des Kraftfahrzeugs dienen. Zur Inbetriebnahme des Bedienfeldes und/oder vor Inbetriebnahme des Kraftfahrzeuges ist das Bedienfeld durch Ablegen einer Zuordnungstabelle in einem Speicher der Schalteranordnung initialisierbar. Die Zuordnungstabelle ordnet jedem Schalter eine Funktion aus der Menge der für das Kraftfahrzeug vorgesehenen Funktionen zu. Die Steuerschaltung der Schalteranordnung enthält einen Prozessor, der mittels eines externen Fensterwatchdog-Bausteins überwacht ist. Weiter ist die Steuerschaltung mit einer Spannungsreglerbaugruppe versehen und an ein Bussystem, bei dem es sich beispielsweise um den CAN-Bus handelt, mittels eines Hochgeschwindigkeitsübertragungs-Bausteins sowie einer vorgeschalteten Entstördrossel angekoppelt.

Die Steuerschaltung stellt anhand der auf den Signalleitungen übertragenen Signale den Schaltzustand des jeweiligen Schalters in der Schalteranordnung fest. Hierzu kann die Steuerschaltung die Signalleitungen beispielsweise mittels eines Multiplexverfahrens über Analog/Digital-Wandler einlesen. Anhand der im Speicher abgelegten Zuordnung für den jeweiligen betätigten Schalter wird dann in der Steuerschaltung überprüft, welche Funktion gewählt ist. Bei Bedarf kann anschließend in der Steuerschaltung ein die jeweilige Funktion codierendes Bussignal generiert und dieses auf die Busleitung übertragen werden. Zur Minimierung des Stromverbrauchs kann die Versorgungsspannung für die elektronischen Bauteile der Schalteranordnung in einen Sleep-Modus mit verminderten Strombedarf schaltbar sowie die Signalspannungsversorgung für die Schalter abschaltbar sein.

Häufig besitzen die Schalter des Bedienfeldes eine Funktions- und/oder Symbolbeleuchtung, wobei die Zuordnung der Funktions- und/oder Symbolbeleuchtung zum jeweiligen Schalter bei der Initialisierung im Speicher abgelegt wird. Die Funktions- und/oder Symbolbeleuchtung ist ebenfalls von der Steuerschaltung ansteuerbar und bei Bedarf auch mittels einer Pulsweitenmodulation dimmbar.

Besteht die gesamte Schalteranordnung aus mehreren einzelnen Bedienfeldern, so können die Bedienfelder voneinander unabhängig und jeweils als ein Busknoten ausgebildet sein. Jedes Bedienfeld ist dann separat mit einer Zuordnungstabelle initialisiert. Weiter ist jedes Bedienfeld an eine Busleitung angeschlossen und die Informationen zu den Schaltzuständen der im jeweiligen Bedienfeld angeordneten Schalter werden vom jeweiligen Bedienfeld direkt auf die Busleitung übertragen. In einer alternativen Ausgestaltung ist lediglich ein Bedienfeld als unabhängiger Master-Busknoten ausgebildet, während die weiteren Bedienfelder als vom Master-Busknoten abhängige Slave-Busknoten, die lediglich Grundfunktionen eines Busknotens besitzen, ausgebildet sind. Die Slave-Busknoten übertragen die Informationen zu den Schaltzuständen der im jeweiligen Bedienfeld angeordneten Schalter ohne Kenntnis deren Funktion über die Busleitung an den Master-Busknoten. Der Master-Busknoten, der mit einer Zuordnungstabelle für alle Bedienfelder initialisiert ist, setzt dann diese empfangenen Informationen entsprechend der Zuordnungstabelle in Bussignale um. In nochmals einer anderen Ausgestaltung können die abhängigen Bedienfelder auch lediglich als Slave-Steuergeräte ohne Busfunktion ausgebildet sein, wobei die Slave-Steuergeräte jeweils eine serielle Schnittstelle besitzen. Mittels einer seriellen Datenleitung sind die Slave-Steuergeräte über die seriellen Schnittstellen mit dem Master-Busknoten verbunden. Die Informationen zu den Schaltzuständen der im jeweiligen Bedienfeld angeordneten Schalter werden dann über die serielle Schnittstelle und die serielle Datenleitung an den Master-Busknoten übertragen, der diese Informationen dann wiederum in Bussignale umsetzt.

Die mit der Erfindung erzielten Vorteile bestehen insbesondere darin, daß der elektrische Schalter universell verwendbar ist. Erst durch Aufstecken des entsprechenden Steckers wird festgelegt, ob es sich um einen Lastschalter oder einen Signalspannungsschalter handelt. Der Schalter kann sogar gleichzeitig als Lastschalter und als Signalspannungsschalter dienen. Dadurch ergibt sich eine Verringerung der Lagerhaltung, was wiederum zu Kosteneinsparungen führt. Außerdem sind solche Schalter verwendende Schalteranordnungen flexibler auszugestalten, da erst bei der Initialisierung der Schalteranordnung festgelegt wird, welche Funktion dem jeweiligen Schalter zugeordnet ist. Somit können verschiedene Versionen derartiger Bedienfelder für Kraftfahrzeuge modulartig unter geringen Kosten vorrätig gehalten werden, wobei erst nach der Montage im Kraftfahrzeug die Initialisierung für die jeweilig gewünschte Ausstattungsvariante erfolgt. Weiterhin verringert sich dadurch auch die Gefahr von Fehlmontagen, was zu einer erheblichen Qualitätsverbesserung führt.

Ausführungsbeispiele der Erfindung sind in den Zeichnungen dargestellt und werden im folgenden näher beschrieben. Es zeigen
- Fig. 1: schematisch eine Schalteranordnung für ein Bedienfeld in einem Kraftfahrzeug als Blockschaltbild,
- Fig. 2: einen Längsschnitt durch die Schalteranordnung entlang der Linie 2-2 aus Fig. 1,
- Fig. 3: einen Längsschnitt durch den Schalter entsprechend der Fig. 2 in vergrößerter Darstellung,
- Fig. 4: schematisch eine Schalteranordnung mit mehreren Bedienfeldern,
- Fig. 5: schematisch eine Schalteranordnung mit mehreren Bedienfeldern in einer weiteren Ausführungsform,
- Fig. 6: schematisch eine Schalteranordnung mit mehreren Bedienfeldern in noch einer weiteren Ausführungsform und
- Fig. 7: ein Prinzipschaltbild zur elektronischen Beschaltung eines Schalters im Bedienfeld.

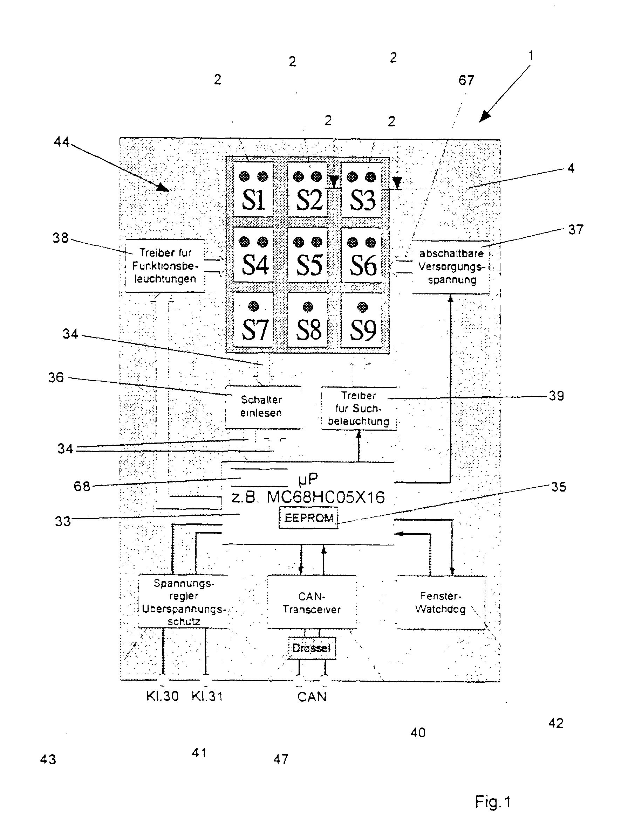

In Fig. 1 ist in einem schematischen Blockschaltbild eine Schalteranordnung 1 mit mehreren Schaltern 2 gezeigt. Die Schalteranordnung 1 findet Verwendung als Bedienfeld 44 in einem Kraftfahrzeug, beispielsweise in einem Nutzfahrzeug, wie einem Lastkraftwagen. Die Schalter 2 dienen zur Betätigung verschiedener Funktionen des Kraftfahrzeugs durch den Benutzer. Vorliegend umfaßt die Schalteranordnung 1 neun mit S1 bis S9 näher bezeichnete Schalter 2. In der Schalteranordnung 1 befinden sich sowohl Schalter 2 zum Schalten von Leistungsspannung, beispielsweise ein Schalter S1 zum Ein- und Ausschalten der Kraftfahrzeugbeleuchtung, wie auch ein Schalter 2 zum Schalten von Signalspannung, beispielsweise ein Schalter S2 zur Betätigung eines Steuergerätes für die elektrischen Fensterheber.

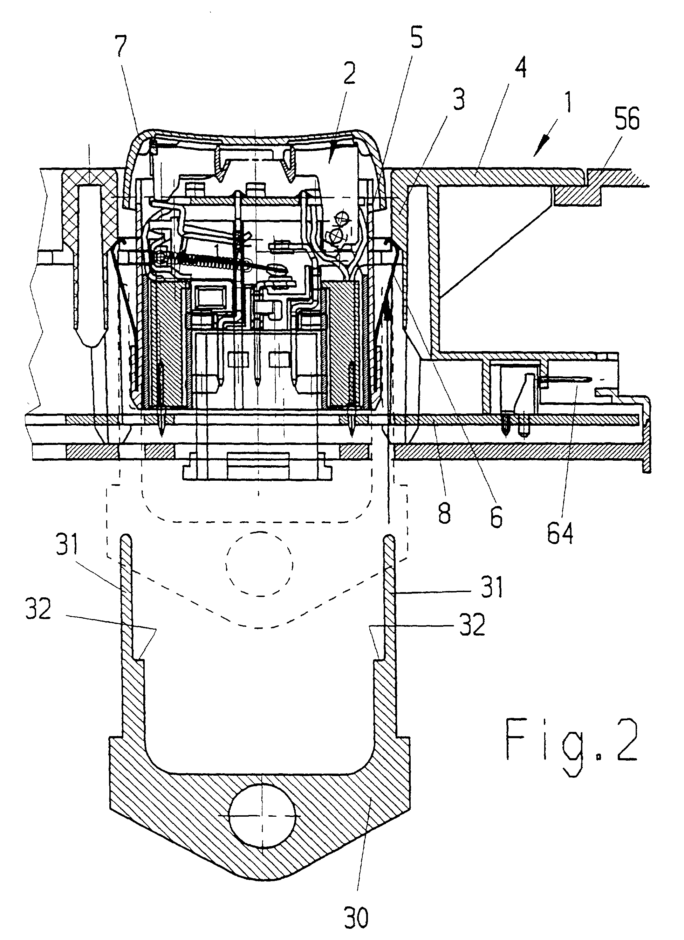

Ein Teilschnitt durch die Schalteranordnung 1 ist näher in Fig. 2 zu sehen. Die Schalteranordnung 1 umfaßt ein Trägerbauteil 3, das beispielsweise in der Armaturentafel 56, der Mittelkonsole o. dgl. des Kraftfahrzeugs eingebaut und an der Oberseite mit einer Art von Frontblende 4 versehen ist. Die elektrischen Schalter 2 besitzen jeweils ein Gehäuse 5, an dessen Seitenwände federelastische Rastarme 6 angeordnet sind. Mittels dieser Rastarme 6 ist das Gehäuse 5 des Schalters 2 derart am Trägerbauteil 3 klemmend und/oder verriegelndeinsteckbar, daß das Betätigungsorgan 7 des Schalters 2 aus der Frontblende 4 herausragt. Der Schalter 2 kann mit einer im Trägerbauteil 3 befindlichen Leiterplatte 8 in Verbindung stehen.

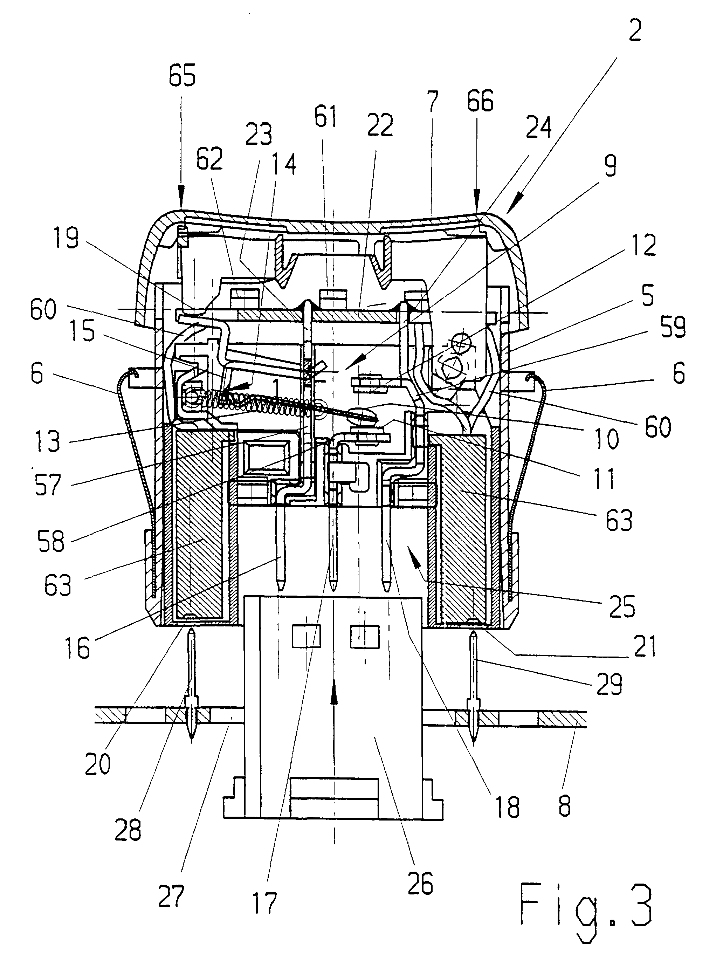

Die Ausbildung des Schalter 2 ist in vergrößerter Darstellung in Fig. 3 näher zu sehen. Im Gehäuse 5 befindet sich wenigstens ein Kontaktsystem 9. An der Oberseite des Gehäuses 5 ist ein insbesondere als Wippe ausgebildetes Betätigungsorgan 7 angeordnet, das zur manuellen schaltenden Einwirkung auf das Kontaktsystem 9 dient. Bei einem solchen Wippschalter kann es sich insbesondere anbieten, zwei Kontaktsysteme 9 im Gehäuse 5 anzuordnen. Befindet sich die Wippe 7 in der in Fig. 3 gezeigten neutralen Stellung, so sind die beiden Kontaktsysteme 9 im ausgeschalteten Schaltzustand. Durch Druckeinwirkung auf eine Seite 65 der Wippe 7 durch den Benutzer wird die Wippe 7 in die erste betätigte Schaltstellung und dadurch das erste Kontaktsystem 9 in einen eingeschalteten Schaltzustand gebracht. In der zweiten betätigten Stellung der Wippe 7, die durch Druckeinwirkung auf die andere Seite 66 der Wippe 7 erreicht wird, befindet sich dann das zweite Kontaktsystem 9 in einem eingeschalteten Schaltzustand.

Das Kontaktsystem 9 ist vorliegend als Schnappsystem ausgebildet und besteht aus einem zungenartigen Schaltkontakt 10 sowie einem Festkontakt 12. Bevorzugterweise besitzt das Kontaktsystem 9 einen weiteren Festkontakt 11. Eine Zugfeder 13 ist einerseits fest am Gehäuse 5 und andererseits im Schaltkontakt 10 eingehängt. Der Schaltkontakt 10 ist in einem Schneidenlager 14 an einem Lagerarm 15 bewegbar gelagert und der Lagerarm 15 ist seinerseits an einem elektrischen Anschlußteil 57 bewegbar gelagert. Das Betätigungsorgan 7 wirkt mittels eines Ansatzes 19 auf den Lagerarm 15 ein, so daß der Schaltkontakt 10 mit den an weiteren elektrischen Anschlußteilen 58, 59 befindlichen Festkontakten 11, 12 schaltend zusammenwirkt und insbesondere zwischen den beiden Festkontakten 11, 12 in der Art eines Wechslers umschaltet.

Die Anschlußteile 57, 58, 59 des Kontaktsystems 9 sind zur Unterseite des Gehäuses 5 verlängert und gehen an dieser Seite in elektrische Anschlüsse 16, 17, 18 über. Die am Gehäuse 5 befindlichen, zum Kontaktsystem 9 führenden elektrischen Anschlüsse 16, 17, 18 dienen als erste elektrische Anschlüsse 16, 17, 18 zum Anlegen einer ersten Spannung in der Art einer Leistungsspannung für einen hohen Leistungsstrom. Am Gehäuse 5 befinden sich weiter zweite elektrische Anschlüsse 20, 21, die zum Anlegen einer zweiten Spannung in der Art einer Signalspannung für einen niedrigen Signalstrom dienen, was nachfolgend noch näher erläutert ist. Das Kontaktsystem 9 ist nun derart ausgelegt, daß sowohl hohe, beispielsweise ca. 10 bis 15 A betragende Leistungsströme für eine große Leistung als auch niedrige, beispielsweise bis ca. 10 mA betragende Signalströme für eine kleine Leistung geschaltet werden können. Dadurch ist wahlweise bei Bedarf der Anschluß für Leistungsstrom über die ersten elektrischen Anschlüsse 16, 17, 18 und/oder für Signalstrom über die zweiten elektrischen Anschlüsse 20, 21 am elektrischen Schalter 2 ermöglicht. Wie man sieht, ist erfindungsgemäß der elektrische Schalter 2 so ausgelegt, daß dieser sowohl als Lastschalter als auch als Signalschalter geeignet ist. Erst durch Verbindung mit den entsprechenden Anschlüssen 16, 17, 18 oder 20, 21 wird festgelegt, ob es sich um einen Lastschalter, um einen Signalschalter oder um einen kombinierten Last-/Signal-Schalter handelt. Vorteilhafterweise wird aufgrund dieser Ausbildung des Schalters 2 eine verringerte Lagerhaltung und ein flexibleres Bedienfeld im Kraftfahrzeug erzielt.

Zweckmäßigerweise ist das Kontaktsystem 9 derart ausgebildet, daß es einerseits ein für Leistungsströme geeignetes Kontaktmaterial enthält und andererseits einen geringen elektrischen übergangswiderstand besitzt. Beispielsweise geeignet als Kontaktmaterial für die kontaktgebenden. Teile des Kontaktsystems 9, nämlich den Schaltkontakt 10 und den Festkontakt 11, 12, ist eine Silber-Nickel-Legierung, wie AgNi10. Zur Verringerung des Übergangswiderstands können die kontaktgebenden Teile des Kontaktsystems 9 mit einer elektrisch gut leitfähigen Schicht versehen sein, wobei zur Beschichtung eine Goldschicht oder eine sonstige Edelmetallschicht geeignet ist. Dadurch ist gewährleistet, daß bei Verwendung des Schalters 2 zum Schalten von Signalströmen lediglich ein geringer Spannungsabfall am Kontaktsystem 9 auftritt. Bei Verwendung des Schalters 2 zum Schalten von Leistungsströmen kann dann zwar gegebenenfalls eine Zerstörung oder Abtragung dieser Schicht auftreten, womit eine Erhöhung des Spannungsabfalls am Kontaktsystem 9 einhergeht. Da es sich bei den Leistungsströmen jedoch um hohe Ströme handelt, ist immer noch eine ausreichende Kontaktgabe gewährleistet.

Das Gehäuse 5 des Schalters 2 kann mit einer Seite und zwar zweckmäßigerweise mit seiner Unterseite auf der Leiterplatte 8 befestigt sein. An einer Seite und zwar bevorzugterweise an der Unterseite des Gehäuses 5 befindet sich eine Aufnahme 25, die die ersten elektrischen Anschlüsse 16, 17, 18 umfaßt. In diese Aufnahme 25 ist ein Stecker 26 für die Zuführung der Leistungsspannung wahlweise aufsteckbar. Hierzu befindet sich die Aufnahme 25 im mittleren Bereich des Gehäuses 5, und in der Leiterplatte 8 ist eine mit der Aufnahme 25 korrespondierende Öffnung 27 angeordnet, deren Form und Größe das Hindurchführen des Stecker 26 gestattet. Ist der Stecker 26 aufgesteckt, so wird die Leistungsspannung an den Anschlüssen 16, 17, 18 über das Kontaktsystem 9 bei Betätigung des Betätigungsorgans 7 durch den Benutzer geschaltet.

Auf der Leiterplatte 8 befinden sich Zuleitungen in Form von Leiterbahnen für die Signalspannung. Die zweiten elektrischen Anschlüsse 20, 21, die sich an der die Aufnahme 25 aufweisenden Seite und damit ebenfalls an der Unterseite des Gehäuses 5 befinden, sind dann wahlweise mit diesen Leiterbahnen kontaktierbar. Die zweiten elektrischen Anschlüsse 20, 21 sind zweckmäßigerweise dem Rand des Gehäuses 5 zugeordnet und benachbart zur Aufnahme 25 angeordnet. Es bietet sich an, die zweiten elektrischen Anschlüsse 20, 21 als Steckaufnahmen 63 auszubilden, die in der Art einer schwimmenden Lagerung oder eingerasteten Befestigung im Gehäuse 5 angeordnet sind. Das Gehäuse 5 ist mit den Steckaufnahmen 63 der zweiten elektrischen Anschlüsse 20, 21 dann auf entsprechende Steckkontakte 28, 29, die auf der Leiterplatte 8 befindlich sind und von den Leiterbahnen abgehen, aufsteckbar. Von den zweiten elektrischen Anschlüssen 20, 21 führen elektrische Verbindungsleitungen 60 zu einer im Gehäuse 5 des Schalters 2 befindlichen Platine 22.

Die Platine 22 steht wiederum mit dem Kontaktsystem 9 in elektrischer Verbindung. Hierzu ist das Anschlußteil 57 für den Schaltkontakt 10 mit einer Verlängerung 23 in Richtung zur Oberseite des Gehäuses 5 versehen. Das Anschlußteil 59 für den Festkontakt 12 besitzt ebenfalls eine Verlängerung 24. Die beiden Verlängerungen 23, 24 sind an der Platine 22 verlötet und stellen die elektrische Verbindung zu den jeweiligen Verbindungsleitungen 60 her. Auf der Platine 22 befindet sich ein dem Betätigungsorgan 7 zugeordnetes Leuchtmittel, wie eine Leuchtdiode 61 o. dgl., die der Ausleuchtung der Funktionsbeleuchtung am Betätigungsorgan 7 dient. Eine weitere Leuchtdiode 62 auf der Platine 22 dient der Symbolbeleuchtung am Betätigungsorgan 7. Die Spannungsversorgung für den Betrieb der Leuchtdioden 61, 62 erfolgt ebenfalls über die zweiten elektrischen Anschlüsse 20, 21 und die Verbindungsleitungen 60.

Mittels der dem Schalter 2 zugeführten Signalspannung werden entsprechend der Schaltsteilung des Kontaktsystems 9, die manuell über das Betätigungsorgan 7 eingestellt wird, Schaltsignale erzeugt. Es handelt sich dabei um das Schaltsignal "erste Schaltstellung", wenn der Schaltkontakt 10 am Festkontakt 11 anliegt, und "zweite Schaltstellung", wenn der Schaltkontakt 10 am Festkontakt 12 anliegt. Dieses Schaltsignal wird über die Steckaufnahme 20, 21 den Zuleitungen 34 auf der Leiterplatte 8 zugeführt und weiter zu einer auf der Leiterplatte 8 befindlichen Steuerschaltung 33 übertragen, wie in Fig. 1 zu sehen ist. In der Steuerschaltung 33 sind die Schaltsignale in Bussignale, beispielsweise CAN-Bussignale, umwandelbar und werden dann von der Steuerschaltung 33 auf eine Busleitung 47 übertragen, die mittels eines in Fig. 2 gezeigten Steckers 64 mit der Steuerschaltung 33 verbunden ist.

Wie man anhand der Fig. 2 entnimmt, ist der Schalter 2 durch Einwirken mittels eines Werkzeuges 30 auf den Rastarm 6 entriegelbar sowie aus dem Trägerbauteil 3 herausnehmbar. Das Werkzeug 30 besitzt einen mit dem Rastarm 6 korrespondierenden Arm 31 sowie einen an den Arm 31 anschließenden Ansatz 32. Mittels des Armes 31 kann eine Entriegelung des Rastarmes 6 stattfinden. Gleichzeitig wirkt der Ansatz 32 auf die Unterseite des Gehäuses 5 ein, so daß der Schalter 2 bei Bedarf in einfacher Weise aus dem Trägerbauteil 3 an der der Unterseite des Gehäuses 5 zugeordneten Seite herausdrückbar ist. Gegebenenfalls kann zur Entriegelung des Rastarmes 6 auch ein Schraubendreher o. dgl. genügen.

Wie bereits ausgeführt, enthält die in Fig. 1 gezeigte Schalteranordnung 1 für ein Bedienfeld 44 mehrere Schalter S1 bis S9, die bevorzugterweise entsprechend dem beschriebenen Schalter 2 ausgebildet sind. Das Bedienfeld 44 besitzt eine beispielsweise aus einem Mikroprozessor bestehende Steuerschaltung 33. Zu den zweiten elektrischen Anschlüssen 20, 21 führt eine Versorgungsleitung 67 für die Signalspannung an den Schaltern S1 bis S9. Weiter führen von der Steuerschaltung 33 Signalleitungen 34 zu den einzelnen Schaltern S1 bis S9, die zur Übertragung von Signalen, und zwar insbesondere von Schaltsignalen, zwischen der Steuerschaltung 33 und den Schaltern S1 bis S9 dienen. Die Schalteranordnung 1 besitzt weiterhin einen Speicher 35, der gegebenenfalls als EEPROM in der Steuerschaltung 33 integriert sein kann. In diesem Speicher 35 ist eine Zuordnung, insbesondere in Form einer Zuordnungstabelle abgelegt, die jedem einzelnen Schalter S1 bis S9 eine vom jeweiligen Schalter zu schaltende oder/und von der Steuerschaltung 33 auszulösende Funktion aus einer Menge von Funktionen zuordnet.

Die Schalteranordnung 1 wird zur Inbetriebnahme des Bedienfeldes 44 und/oder auch vor Inbetriebnahme des Kraftfahrzeuges durch Ablegen der Zuordnungstabelle im Speicher 35 initialisiert. Bei der Initialisierung wird die Zuordnung der Schalter S1 bis S9 zur jeweiligen Funktion festgelegt. Dadurch ist der Steuerschaltung 33 bekannt, welcher Schalter S1 bis S9 an welcher Stelle in der Schalteranordnung 1 des Bedienfeldes 44 sitzt. Folglich erhält man durch diese Maßnahme eine sehr flexible Schalteranordnung 1, wobei sogar eine Zuordnung der Schalter S1 bis S9 nach Wunsch möglich ist.

Die Betätigung eines Schalters S1 bis S9 in der Schalteranordnung 1 durch den Benutzer ist mittels der auf den Signalleitungen 34 übermittelten Signale von der Steuerschaltung 33 feststellbar. Hierzu liest die Steuerschaltung 33 die Signalleitungen 34 beispielsweise mittels eines Multiplexverfahrens über einen Multiplexer 36 sowie einen in der Steuerschaltung 33 integrierten Analog-Digital-Wandler 68 ein. Nachdem festgestellt ist, welcher der Schalter S1 bis S9 und gegebenenfalls welches Kontaktsystem 9 im Schalter S1 bis S9 betätigt ist, wird von der Steuerschaltung 33 anhand der Zuordnungstabelle für den betätigten Schalter 2 ermittelt, welche Funktion gewählt ist. In der Steuerschaltung 33 kann dann, falls erforderlich, ein der jeweiligen Funktion entsprechendes Bussignal generiert werden. Bevorzugterweise handelt es sich bei dem Bussignal in einem Kraftfahrzeug um eine CAN-Botschaft. Die Steuerschaltung 33 ist weiter an die Busleitung 47 mittels eines Transceivers bzw. Hochgeschwindigkeitsübertragungs-Bausteins 40 mit einer vorgeschalteten Entstördrossel 41 angekoppelt, so daß das Bussignal über die Busleitung 47 zu den entsprechenden Steuergeräten im Kraftfahrzeug gesendet wird.

Soweit gewünscht können die Schalter S1 bis S9 eine Funktions- und/oder Symbolbeleuchtung besitzen. In der Zuordnungstabelle ist auch die Zuordnung der Funktionsbeieuchtung zum jeweiligen Schalter S1 bis S9 abgelegt. Die Funktionsbeleuchtungen der Schalter S1 bis S9 sind von der Steuerschaltung 33 mittels eines Treiberbausteins 38 ansteuerbar, der beispielsweise in einem Schieberegisterbaustein zur Einsparung von Zuleitungen integriert ist. Stellt die Steuerschaitung 33 die Betätigung eines Schalters S1 bis S9 fest, so steuert sie die zugehörige Funktionsbeleuchtung an, womit dem Benutzer eine Rückmeldung über die erfolgte Betätigung des Schalters S1 bis S9 gegeben ist. Die Symbolbeleuchtung, die dem Benutzer am Betätigungsorgan 7 die jeweilige Funktion des Schalters S1 bis S9 visualisiert, wird ebenfalls über einen entsprechenden Treiberbaustein 39 mit Spannung versorgt. Die Funktions- und/oder Symbolbeleuchtungen sind bei Bedarf mittels einer Pulsweitenmodulation durch die Steuerschaltung 33 dimmbar, um die Helligkeit bei Nacht zum Vermeiden einer Blendung abzuschwächen. Die Dimmung kann beispielsweise durch eine entsprechende Busbotschaft, die der Steuerschaltung 33 über die Busleitung 47 zugeführt wird, auslösbar sein.

Der Prozessor in der Steuerschaltung 33 wird mittels eines externen Fensterwatchdog-Bausteins 42 überwacht, so daß fehlerhafte Zustände im Prozessor der Steuerschaltung 33 erkannt und berichtigt werden können. Außerdem ist die Steuerschaltung 33 mit einer Spannungsreglerbaugruppe 43 versehen, die insbesondere auf die Verhältnisse für den Nutzfahrzeug-Bereich, beispielsweise den Lastkraftwagen-Bereich ausgelegt ist. Schließlich kann die Versorgungsspannung für die elektronischen Bauteile im Bedienfeld 44, wie die Steuerschaltung 33 usw., zur Minimierung des Stromverbrauchs in einen Sleep-Modus mit verminderten Strombedarf schaltbar sein. Mittels eines elektronischen Schaltbausteins 37 kann auch die über die Versorgungsleitung 67 zugeführte Signalspannung für die Schalter S1 bis S9 von der Steuerschaltung 33 an- und abschaltbar sein.

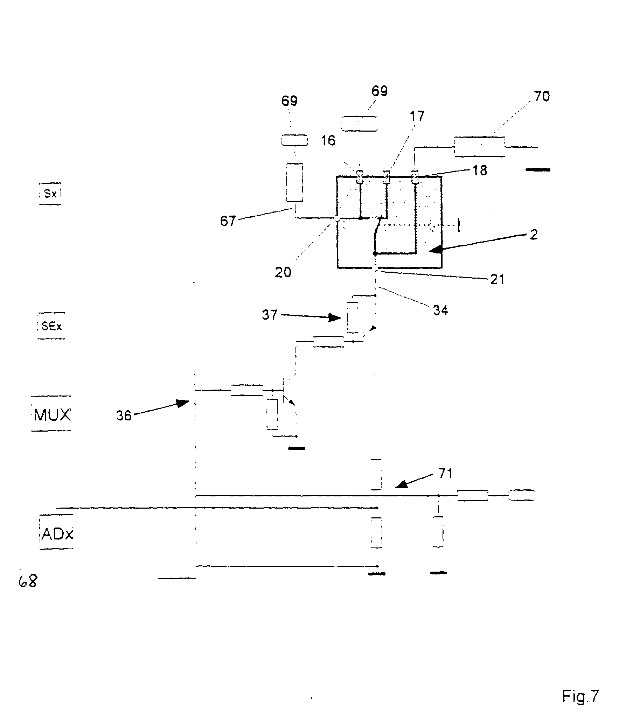

Ein Prinzipschaltbild für die beschriebene Beschaltung des Schalters 2 im Bedienfeld 44 ist in Fig. 7 näher zu sehen. Die Batterie 69 des Kraftfahrzeugs ist wahlweise mittels der ersten elektrischen Anschlüsse 16, 17, 18 über den Schalter 2 an den zu schaltenden elektrischen Verbraucher 70 angeschlossen. Wahlweise kann die Batterie 69 über die Versorgungsleitung 67 auch am zweiten elektrischen Anschluß 20 zur Versorgung des Schalters 2 mit der Signalspannung anliegen. Die am anderen zweiten elektrischen Anschluß 21 mit dem Schalter 2 verbundene Signalleitung 34 ist zum elektronischen Schaltungsbaustein 37 geführt, von dort zum Multiplexer 36 und schließlich zu einem Spannungsteiler 71, an den der Analog-Digital-Wandler 68 in der Steuerschaltung 33 angeschlossen ist. Wie man anhand des Schaltbildes erkennt, kann sowohl alternativ die Leistungsspannung an den ersten elektrischen Anschlüssen 16, 17, 18 oder die Signalspannung an den zweiten elektrischen Anschlüssen 20, 21 als auch gleichzeitig die Leistungs- und die Signalspannung an den ersten und zweiten elektrischen Anschlüssen 16, 17, 18, 20, 21 anliegen, wobei jeweils die gewünschte Funktion des Bedienfeldes 44 gewährleistet ist.

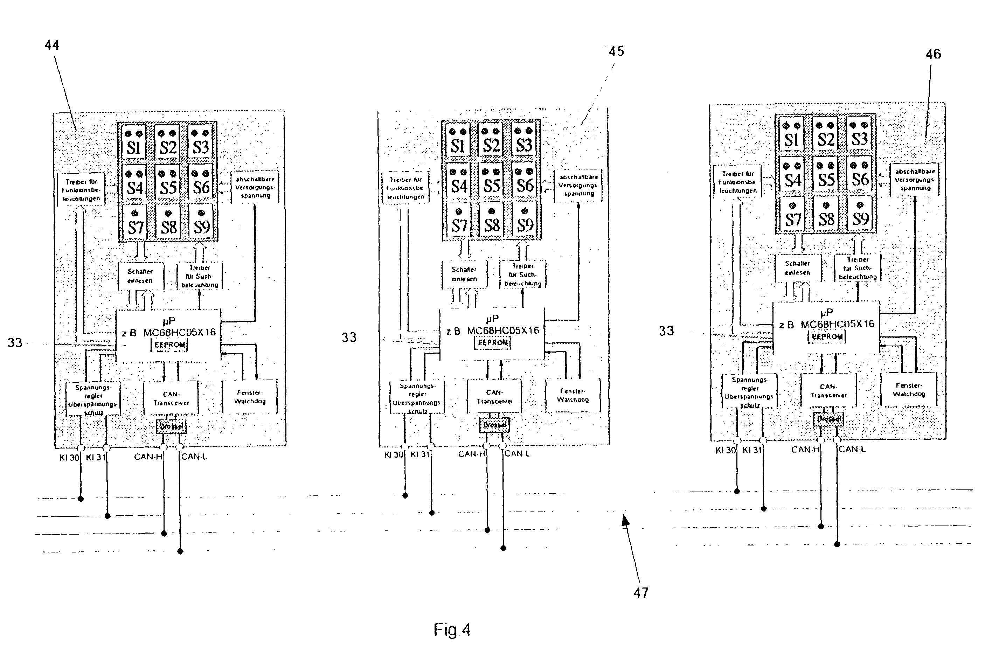

In den Fig. 4 bis 6 sind noch mehrere Ausführungsbeispiele für derartige Schalteranordnungen in Kraftfahrzeugen zu sehen.

Gemäß der in Fig. 4 gezeigten Ausführungsform besteht die Schalteranordnung aus mehreren Bedienfeldern 44, 45, 46. Die Bedienfelder 44, 45, 46 sind voneinander unabhängig und jeweils als Busknoten, nämlich als CAN-Knoten, ausgebildet. Jedes Bedienfeld 44, 45, 46 ist separat mit einer Zuordnungstabelle initialisiert. Aufgrund der Unabhängigkeit der einzelnen Bedienfelder 44, 45, 46 werden die Informationen zu den im jeweiligen Bedienfeld 44, 45, 46 angeordneten Schaltern S1 bis S9 vom jeweiligen Bedienfeld 44, 45, 46 direkt auf die Busleitung 47 übertragen. Weiter wird auch in jedem Bedienfeld 44, 45, 46 die Dimmung der Funktions- und/oder Symbolbeleuchtung durch die Steuerschaltung 33 entsprechend der über die Busleitung 47 übertragenen Information selbst ausgelöst.

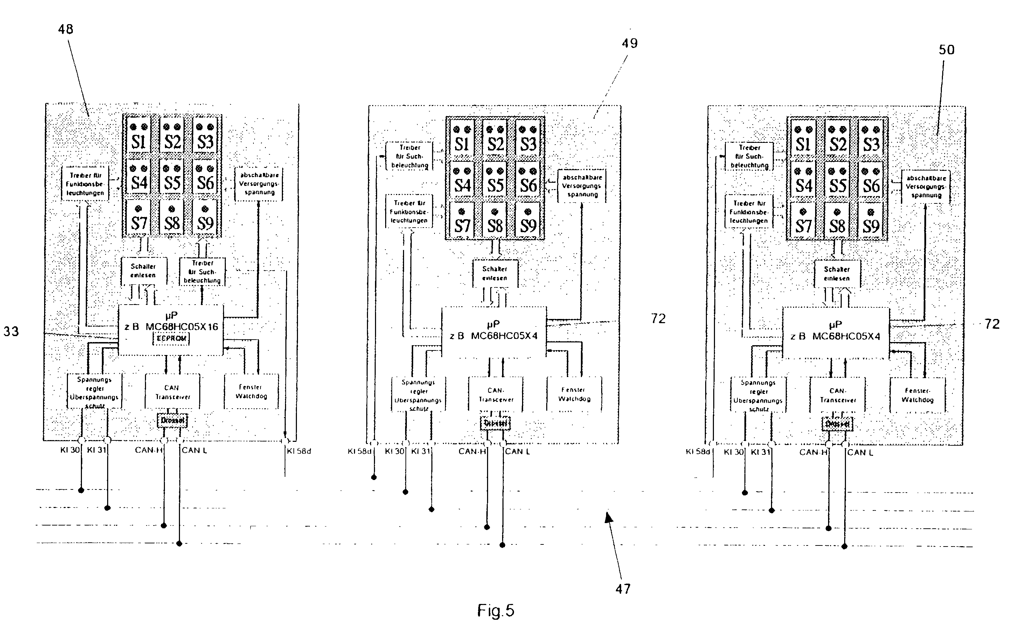

Bei der weiteren Ausführungsform, die in Fig. 5 zu sehen ist, besteht die Schalteranordnung aus mehreren Bedienfeldern 48, 49, 50. Jedes Bedienfeld 48, 49, 50 ist als Busknoten, nämlich CAN-Knoten ausgebildet, jedoch ist ein Bedienfeld 48 unabhängig als Master-Busknoten und die weiteren Bedienfelder 49, 50 sind als vom Master-Busknoten abhängige Slave-Busknoten ausgebildet. Die Bedienfelder 49, 50 sind lediglich mit den Grundfunktionen eines Busknotens ausgestattet und besitzen eine Steuerschaitung 72, die aus einem einfacheren Prozessor besteht. Die als Slave-Busknoten dienenden Bedienfelder 49, 50 senden die Informationen zu den im jeweiligen Bedienfeld 49, 50 angeordneten Schaltern S1 bis S9 ohne Kenntnis von deren Funktion über die Busleitung 47 an das als Master-Busknoten dienende Bedienfeld 48. Das Bedienfeld 48 setzt dann die von den Bedienfeldern 49, 50 empfangenen Informationen entsprechend der mit der Initialisierung abgelegten Zuordnungstabelle für sämtliche Bedienfelder 48, 49, 50 auf die richtigen Bus-Botschaften um. Die Versorgungsspannung für die Pulsweitenmodulation zur Dimmung der Funktions- und/oder Symbolbeleuchtung wird von der Steuerschaltung 33 im Bedienfeld 48 für sämtliche Bedienfelder 48, 49, 50 generiert.

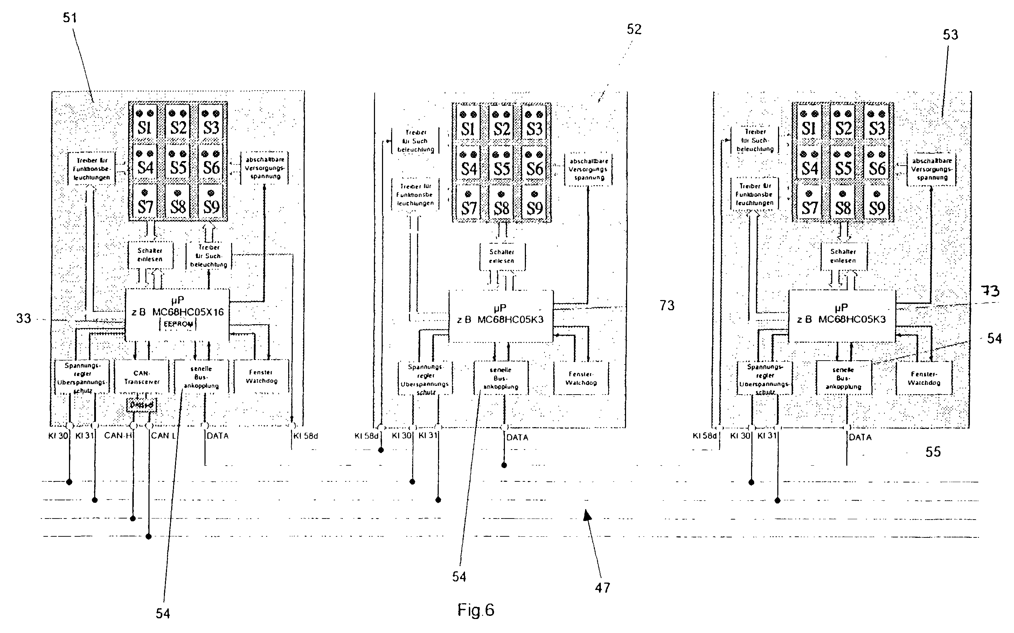

Bei nochmals einer weiteren Ausführungsform, die in Fig. 6 gezeigt ist, besteht die Schalteranordnung ebenfalls aus mehreren Bedienfeldern 51, 52, 53. Wiederum ist ein Bedienfeld 51 unabhängig als Master-Busknoten, nämlich als CAN-Knoten ausgebildet. Die weiteren Bedienfelder 52, 53 sind wiederum vom Master-Busknoten abhängig als Slave-Steuergeräte ausgebildet, wobei die Bedienfelder 52, 53 jedoch keinen Busknoten besitzen und mit einem nochmals einfacheren Prozessor für die Steuerschaltung 73 ausgestattet sind. Die Bedienfelder 51, 52, 53 sind weiter mit jeweils einer seriellen Schnittstelle 54 ausgestattet, wobei die seriellen Schnittstellen 54 der Bedienfelder 51, 52, 53 über eine Datenleitung 55 miteinander verbunden sind. Über die Datenleitung 55 und die seriellen Schnittstellen 54 senden die als Slave-Steuergeräte ausgebildeten Bedienfelder 52, 53 die Informationen zu den im jeweiligen Bedienfeld 52, 53 angeordneten Schaltern S1 bis S9 ohne Kenntnis von deren Funktion an das als Master-Busknoten dienende Bedienfeld 51. Das Bedienfeld 51 setzt dann die von den Bedienfeldern 52, 53 empfangenen Informationen entsprechend der mit der Initialisierung abgelegten Zuordnungstabelle für sämtliche Bedienfelder 51, 52, 53 auf die richtigen Bus-Botschaften um und überträgt diese Bussignale anschließend auf die Busleitung 47. Die Versorgungsspannung für die Pulsweitenmodulation zur Dimmung der Funktions- und/oder Symbolbeleuchtung wird wiederum von der Steuerschaltung 33 für alle Bedienfelder 51, 52, 53 generiert.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann der erfindungsgemäße Schalter bzw. die erfindungsgemäße Schalteranordnung nicht nur in Kraftfahrzeugen eingesetzt werden, sondern auch an Werkzeugmaschinen, Haushaltsgeräten o. dgl. Verwendung finden.

### Bezugszeichen-Liste:

- 1:: Schalteranordnung
- 2:: elektrischer Schalter
- 3:: Trägerbauteil (von Schalteranordnung)
- 4:: Frontblende
- 5:: Gehäuse
- 6:: Rastarm
- 7:: Betätigungsorgan / Wippe
- 8:: Leiterplatte
- 9:: Kontaktsystem
- 10:: Schaltkontakt
- 11,12:: Festkontakt
- 13:: Zugfeder
- 14:: Schneidenlager
- 15:: Lagerarm
- 16,17, 18:: erster elektrischer Anschluß
- 19:: Ansatz (an Betätigungsorgan)
- 20,21:: zweiter elektrischer Anschluß
- 22:: Platine (vom Kontaktsystem)
- 23,24:: Verlängerung (vom Anschlußteil für Kontaktsystem)
- 25:: Aufnahme
- 26:: Stecker
- 27:: Öffnung (in Leiterplatte)
- 28,29:: Steckkontakt (für zweiten elektrischen Anschluß)
- 30:: Werkzeug (zum Entriegeln des Schalters)
- 31:: Arm (an Werkzeug)
- 32:: Ansatz (an Werkzeug)
- 33:: Steuerschaltung
- 34:: Signalleitung
- 35:: Speicher
- 36:: Multiplexer
- 37:: elektronischer Schaltbaustein
- 38:: Treiberbaustein (für Funktionsbeleuchtung)
- 39:: Treiberbaustein (für Symbolbeleuchtung)
- 40:: Hochgeschwindigkeitsübertragungs-Baustein (für CAN-Bus)
- 41:: Entstördrossel
- 42:: Fensterwatchdog-Baustein
- 43:: Spannungsregler-Baugruppe
- 44,45, 46:: Bedienfeld (1. Ausführung)
- 47:: Busleitung
- 48,49, 50:: Bedienfeld (2. Ausführung)
- 51,52, 53:: Bedienfeld (3. Ausführung)
- 54:: serielle Schnittstelle
- 55:: Datenleitung (für serielle Schnittstelle)
- 56:: Armaturentafel (von Kraftfahrzeug)
- 57,58, 59:: Anschlußteil
- 60:: elektrische Verbindungsleitung
- 61,62:: Leuchtdiode
- 63:: Steckaufnahme (für zweiten elektrischen Anschluß)
- 64:: Stecker (für Busleitung)
- 65,66:: Seite (der Wippe)
- 67:: Versorgungsleitung (für Signalspannung)
- 68:: Analog-Digital-Wandler
- 69:: Batterie (im Kraftfahrzeug)
- 70:: elektrischer Verbraucher
- 71:: Spannungsteiler
- 72:: Steuerschaltung (für Slave-Busknoten)
- 73:: Steuerschaltung (für Slave-Steuergerät)

## Patentansprüche

1. Elektrischer Schalter, insbesondere für ein Kraftfahrzeug, mit einem Kontaktsystem (9), bestehend aus mindestens einem Festkontakt (11, 12) und einem Schaltkontakt (10), das zum Schalten eines hohen Leistungsstroms sowie eines niedrigen Signalstroms ausgelegt ist, und mit zum Kontaktsystem (9) führenden elektrischen Anschlüssen, **dadurch gekennzeichnet, daß** die elektrischen Anschlüsse aus ersten elektrischen Anschlüssen (16, 17, 18) zum Anlegen einer ersten Spannung in der Art einer Leistungsspannung für einen hohen Leistungsstrom und aus zweiten elektrischen Anschlüssen (20, 21) zum Anlegen einer zweiten Spannung in der Art einer Signalspannung für einen niedrigen Signalstrom bestehen, wobei die ersten elektrischen Anschlüsse (16, 17, 18) und die zweiten elektrischen Anschlüsse (20, 21) mit nur dem einen Kontaktsystem (9) in elektrischer Verbindung stehen derart, daß wahlweise bei Bedarf ein Anschluß zur Zuführung von Leistungsstrom über die ersten elektrischen Anschlüsse (16, 17, 18) und/oder von Signalstrom über die zweiten elektrischen Anschlüsse (20, 21) zum Kontaktsystem ermöglicht.

2. Elektrischer Schalter nach Anspruch 1, **dadurch gekennzeichnet, daß** das Kontaktsystem (9) in einem Gehäuse des Schalters (2) befindlich ist, daß die elektrischen Anschlüsse (16, 17, 18, 20, 21) sich am Gehäuse (5), insbesondere an dessen Unterseite befinden, sowie daß am Gehäuse (5), insbesondere an dessen Oberseite ein beispielsweise als Wippe ausgebildetes Betätigungsorgan (7) zur manuellen schaltenden Einwirkung auf das Kontaktsystem (9) angeordnet ist, und daß vorzugsweise im Gehäuse (5) ein weiteres, zweites Kontaktsystem (9) angeordnet ist, derart, daß in einer ersten betätigten Schaltstellung der Wippe (7) das erste Kontaktsytsem (9) in einem eingeschalteten Schaltzustand sowie in einer zweiten betätigten Stellung der Wippe (7) das zweite Kontaktsystem (9) in einem eingeschalteten Schaltzustand befindlich ist.

3. Elektrischer Schalter nach Anspruch 1 oder 2, **dadurch gekennzeichnet, daß** das Gehäuse (5) mit einer Seite, insbesondere mit seiner Unterseite auf einer Leiterplatte (8) befestigt ist, daß vorzugsweise auf der Leiterplatte (8) Zuleitungen für die Signalspannung befindlich sind, wobei die zweiten elektrischen Anschlüsse (20, 21) wahlweise mit den Zuleitungen kontaktierbar sind, daß weiter vorzugsweise die zweiten elektrischen Anschlüsse (20, 21) über eine im Schalter (2) befindliche Platine (22) mit dem Kontaktsystem (9) in elektrischer Verbindung stehen, daß noch weiter vorzugsweise die mittels der zugeführten Signalspannung sowie entsprechend der Schaltstellung des Kontaktsystems (9) vom Schalter (2) erzeugten Schaltsignale zu einer auf der Leiterplatte (8) befindlichen Steuerschaltung (33) übertragbar sind, und daß nochmals weiter vorzugsweise die Schaltsignale in der Steuerschaltung (33) in Bussignale, insbesondere in CAN-Bussignale, umwandelbar sind, die von der Steuerschaltung (33) auf eine Busleitung (47) übertragbar sind.

4. Elektrischer Schalter nach Anspruch 1, 2 oder 3, **dadurch gekennzeichnet, daß** sich an einer Seite, insbesondere an der Unterseite des Gehäuses (5) eine Aufnahme (25) befindet, die die ersten elektrischen Anschlüsse (16, 17, 18) derart umfaßt, daß ein Stecker (26) zur Zuführung der Leistungsspannung wahlweise aufsteckbar ist, daß vorzugsweise die Aufnahme (25) im mittleren Bereich des Gehäuses (5) befindlich ist, und daß weiter vorzugsweise sich in der Leiterplatte (8) eine mit der Aufnahme (25) korrespondierende Öffnung (27) befindet, deren Form und Größe das Hindurchführen des Steckers (26) gestattet.

5. Elektrischer Schalter nach einem der Ansprüche 1 bis 4, **dadurch gekennzeichnet, daß** die zweiten elektrischen Anschlüsse (20, 21) an der die Aufnahme (25) aufweisenden Seite des Gehäuses (5), insbesondere dem Rand des Gehäuses (5) zugeordnet sowie benachbart zur Aufnahme (25), befindlich sind, daß vorzugsweise die zweiten elektrischen Anschlüsse (20, 21) als Steckaufnahmen (63) ausgebildet sind, die gegebenenfalls in der Art einer schwimmenden Lagerung oder eingerasteten Befestigung mit elektrischen Verbindungsleitungen (60) zur Platine (22) im Gehäuse (5) angeordnet sind, derart daß die zweiten elektrischen Anschlüsse (20, 21) auf zugeordnete Steckkontakte (28, 29), die beispielsweise auf der Leiterplatte (8) befindlich sind, aufsteckbar sind.

6. Elektrischer Schalter nach einem der Ansprüche 1 bis 5, **dadurch gekennzeichnet, daß** wenigstens ein federelastischer Rastarm (6) am Gehäuse (5) angeordnet ist, so daß der Schalter (2) klemmend und/oder verriegelnd in ein Trägerbauteil (3), das insbesondere mehrere Schalter (S1 bis S9; 2) in einer Schalteranordnung (1) für ein Bedienfeld enthält, einsteckbar ist, und daß vorzugsweise der Schalter (2) durch Einwirken mittels eines Werkzeuges (30), Schraubendrehers o. dgl. auf den Rastarm (6) entriegelbar sowie aus dem Trägerbauteil (3) herausnehmbar ist, wobei weiter vorzugsweise das Werkzeug (30) einen mit dem Rastarm (6) korrespondierenden Arm (31) zur Entriegelung des Rastarmes (6) sowie einen an den Arm (31) anschließenden Ansatz (32) zum Einwirken auf die Unterseite des Gehäuses (5) besitzt, derart daß der Schalter (2) aus dem Trägerbauteil (3) an der der Unterseite des Gehäuses (5) zugeordneten Seite herausdrückbar ist.

7. Elektrischer Schalter nach einem der Ansprüche 1 bis 6, **dadurch gekennzeichnet, daß** das Kontaktsystem (9) als Schnappsystem ausgebildet ist, wobei insbesondere bei dem Schnappsystem das Betätigungsorgan (7) mittels eines Ansatzes (19) auf einen Lagerarm (15) einwirkt, der Lagerarm (15) an einem Anschlußteil (57) bewegbar gelagert ist, der Schaltkontakt (10) wiederum in einem Schneidenlager (14) am Lagerarm (15) bewegbar gelagert ist, sowie eine Zugfeder (13) einerseits fest im Gehäuse (5) und andererseits im Schaltkontakt (10) eingehängt ist, so daß der Schaltkontakt (10) wenigstens mit einem an einem weiteren Anschlußteil (59) befindlichen Festkontakt (12) schaltend zusammenwirkt, gegebenenfalls zwischen zwei Festkontakten (11, 12) in der Art eines Wechslers umschaltet, daß vorzugsweise die Anschlußteile (57, 58, 59) unter Verlängerung an einer Seite in die ersten elektrischen Anschlüsse (16, 17, 18) übergehen, daß weiter vorzugsweise wenigstens ein Anschlußteil (57, 59) unter Verlängerung an der anderen Seite zur Platine (22) für die elektrische Verbindung mit den zweiten elektrischen Anschlüssen (20, 21) führt, und daß noch weiter vorzugsweise auf der Platine (22) wenigstens eine dem Betätigungsorgan (7) zugeordnete Leuchtdiode (61, 62) o. dgl. für die Funktions- und/oder Symbolbeleuchtung am Betätigungsorgan (7) angeordnet ist, wobei insbesondere die Spannungsversorgung für den Betrieb der Leuchtdiode (61, 62) über die zweiten elektrischen Anschlüsse (20, 21) erfolgt.

8. Elektrischer Schalter nach einem der Ansprüche 1 bis 7, **dadurch gekennzeichnet, daß** das Kontaktsystem (9) derart ausgebildet ist, daß es einerseits ein für Leistungsströme geeignetes Kontaktmaterial enthält und andererseits einen geringen elektrischen Übergangswiderstand besitzt, insbesondere indem die kontaktgebenden Teile des Kontaktsystems (9), wie der Schaltkontakt (10) und der Festkontakt (11, 12) mit einer elektrisch gut leitfähigen Schicht versehen sind, beispielsweise einer Goldschicht o. dgl., so daß bei Verwendung des Schalters (2) zum Schalten von Signalströmen lediglich ein geringer Spannungsabfall am Kontaktsystem (9) auftritt und bei Verwendung des Schalters (2) zum Schalten von Leistungsströmen gegebenenfalls eine Zerstörung oder Abtragung dieser Schicht unter Erhöhung des Spannungsabfalls am Kontaktsystem (9) auftritt.

9. Schalteranordnung zum Schalten und/oder zur Auslösung von Funktionen, beispielsweise für ein Bedienfeld (44) in einem Kraftfahrzeug, mit mehreren Schaltern (S1 bis S9; 2), die nach einem der vorangehenden Ansprüche ausgebildet sind, mit einer Steuerschaltung (33), mit Signalleitungen (34) von der Steuerschaltung (33) zu den Schaltern (S1 bis S9; 2) zur Übertragung von Signalen zwischen der Steuerschaltung (33) und den Schaltern (S1 bis S9; 2), und mit einem Speicher (35), wobei im Speicher (35) eine Zuordnung abgelegt ist, die jedem einzelnen Schalter (S1 bis S9; 2) eine vom jeweiligen Schalter zu schaltende oder/und von der Steuerschaltung (33) auszulösende Funktion aus einer Menge von Funktionen zuordnet.

10. Schalteranordnung nach Anspruch 9, **dadurch gekennzeichnet, daß** zur Inbetriebnahme des Bedienfeldes (44) und/oder vor Inbetriebnahme des Kraftfahrzeuges das Bedienfeld (44) durch Ablegen der Zuordnung, insbesondere einer Zuordnungstabelle, im Speicher (35) initialisierbar ist, daß vorzugsweise die Steuerschaltung (33) einen Prozessor enthält, wobei insbesondere der Betrieb der Steuerschaltung (33) mittels eines externen Fensterwatchdog-Bausteins (42) überwacht ist, daß weiter vorzugsweise die Steuerschaltung (33) mit einer Spannungsreglerbaugruppe (43) versehen ist, die insbesondere auf die Anforderungen im Nutzfahrzeug-Bereich ausgelegt ist, und daß noch weiter vorzugsweise die Steuerschaltung (43) an einen Bus (47), bei dem es sich beispielsweise um den CAN-Bus handelt, insbesondere mittels eines Hochgeschwindigkeitsübertragungs-Bausteins (40) sowie gegebenenfalls mit einer vorgeschalteten Entstördrossel (41), angekoppelt ist.

11. Schalteranordnung nach Anspruch 9 oder 10, **dadurch gekennzeichnet, daß** von der Steuerschaltung (33) anhand der auf den Signalleitungen (34) übertragenen Signale, der Schaltzustand des jeweiligen Schalters (S1 bis S9) feststellbar ist, insbesondere indem die Steuerschaltung (33) die Signalleitungen (34) mittels eines Multiplexverfahrens über Analog/Digital-Wandler (68) einliest, daß anhand der im Speicher (35) abgelegten Zuordnung für einen betätigten Schalter (S1 bis S9) in der Steuerschaltung (33) überprüft wird, welche Funktion gewählt ist, daß vorzugsweise in der Steuerschaltung (33) ein die jeweilige Funktion codierendes Bussignal, insbesondere ein CAN-Bussignal, generierbar ist, und daß weiter vorzugsweise die Versorgungsspannung für die elektronischen Bauteile, wie die Steuerschaltung (33) o. dgl., zur Minimierung des Stromverbrauchs in einen Sleep-Modus mit verminderten Strombedarf schaltbar sowie die Signalspannungsversorgung für die Schalter (S1 bis S9) abschaltbar ist.

12. Schalteranordnung nach Anspruch 9, 10 oder 11, **dadurch gekennzeichnet, daß** wenigstens ein Schalter (S1 bis S9) eine Funktions- und/oder Symbolbeleuchtung besitzt, daß vorzugsweise im Speicher (35) die Zuordnung der Funktions- und/oder Symbolbeleuchtung zum jeweiligen Schalter (S1 bis S9) abgelegt ist, daß weiter vorzugsweise die Funktions- und/oder Symbolbeleuchtung von der Steuerschaltung (33) über zugeordnete Treiber (38, 39), insbesondere mittels Schieberegisterbausteinen mit integrierten Treibern, ansteuerbar ist, und daß noch weiter vorzugsweise die Funktions- und/oder Symbolbeleuchtung bei Bedarf mittels einer Pulsweitenmodulation dimmbar ist, wobei die Dimmung beispielsweise entsprechend einem Bussignal durch die Steuerschaltung (33) auslösbar ist.

13. Schalteranordnung nach einem der Ansprüche 9 bis 12, **dadurch gekennzeichnet, daß** die Schalteranordnung (1) aus mehreren, voneinander unabhängigen und jeweils als Busknoten, insbesondere CAN-Knoten, ausgebildeten Bedienfeldern (44, 45, 46) besteht, daß jedes Bedienfeld (44, 45, 46) separat mit einer Zuordnungstabelle initialisiert ist, daß die Bedienfelder (44, 45, 46) an eine Busleitung (47) angeschlossen sind, und daß die Informationen zu den Schaltzuständen der im jeweiligen Bedienfeld (44, 45, 46) angeordneten Schalter (S1 bis S9) vom jeweiligen Bedienfeld (44, 45, 46) direkt auf die Busleitung (47) übertragen werden.

14. Schalteranordnung nach einem der Ansprüche 9 bis 12, **dadurch gekennzeichnet, daß** die Schalteranordnung (1) aus mehreren, jeweils als Busknoten, insbesondere CAN-Knoten, ausgebildeten Bedienfeldern (48, 49, 50) besteht, wobei ein Bedienfeld (48) als unabhängiger Master-Busknoten und die weiteren Bedienfelder (49, 50) als vom Master-Busknoten abhängige Slave-Busknoten, die lediglich Grundfunktionen eines Busknotens besitzen, ausgebildet sind, daß lediglich der Master-Busknoten (48) mit der Zuordnungstabelle für alle Bedienfelder (48, 49, 50) initialisiert ist, daß die Slave-Busknoten (49, 50) die Informationen zu den Schaltzuständen der im jeweiligen Bedienfeld (49, 50) angeordneten Schalter (S1 bis S9) ohne Kenntnis deren Funktion über die Busleitung (47) an den Master-Busknoten (48) übertragen, und daß der Master-Busknoten (48) die von den Slave-Busknoten (49, 50) empfangenen Informationen entsprechend der Zuordnungstabelle in Bussignale umsetzt sowie anschließend auf die Busleitung (47) überträgt.

15. Schalteranordnung nach einem der Ansprüche 9 bis 12, **dadurch gekennzeichnet, daß** die Schalteranordnung (1) aus mehreren Bedienfeldern (51, 52, 53) besteht, wobei ein Bedienfeld (51) als unabhängiger Master-Busknoten, insbesondere CAN-Knoten, und die weiteren Bedienfelder (52, 53) als vom Master-Busknoten (51) abhängige Slave-Steuergeräte ausgebildet sind, daß die Bedienfelder (51, 52, 53) jeweils eine serielle Schnittstelle (54) besitzen sowie mittels einer seriellen Datenleitung (55) über die seriellen Schnittstellen (54) mit dem Master-Busknoten (51) verbunden sind, daß lediglich der Master-Busknoten (51) mit der Zuordnungstabelle für alle Bedienfelder (51, 52, 53) initialisiert ist, daß die Slave-Steuergeräte (52, 53) die Informationen zu den Schaltzuständen der im jeweiligen Bedienfeld (52, 53) angeordneten Schalter (S1 bis S9) ohne Kenntnis deren Funktion über die serielle Schnittstelle (54) und die serielle Datenleitung (55) an den Master-Busknoten (51) übertragen, und daß der Master-Busknoten (51) die von den Slave-Steuergeräten (52, 53) empfangenen Informationen entsprechend der Zuordnungstabelle in Bussignale umsetzt sowie anschließend auf die Busleitung (47) überträgt.

## Claims

1. An electric switch particularly for a motor vehicle, with a contact system (9) comprising at least one stationary contact (11, 12) and one switching contact (10), designed to switch a high power current and a low signal current, and with electrical connections leading to the contact system (9), **characterised in that** the electrical connections comprise first electrical connections (16, 17, 18) for applying a first voltage in the manner of a power voltage for a high power current and second electrical connections (20, 21) for applying a second voltage in the manner of a signal voltage for a low signal current, the first electrical connections (16, 17, 18) and the second electrical connections (20, 21) being electrically coupled to only one contact system (9), in such a way that coupling to the contact system is optionally enabled as required, to supply power current via the first electrical connections (16, 17, 18) and/or signal current via the second electrical connections (20, 21).

2. An electric switch according to claim 1, **characterised in that** the contact system (9) is located in a casing of the switch (2), that the electrical connections (16, 17, 18. 19, 20, 21) are located on the casing (5), particularly at its underside, that an actuating member (7), for example in the form of a rocker button, for a manual controlling action on the contact system (9) is arranged on the casing (5), particularly at its top, and that a further, second contact system (9) is preferably arranged in the casing (5) in such a way that in a first actuated switching position of the rocker button (7), the first contact system (9) is in a switched-on state, and in a second actuated position of the rocker button, the second contact system (9) is in a switched-on state.

3. An electric switch according to claim 1 or 2, **characterised in that** the casing (5) is fixed on a printed circuit board (8) at one side, particularly its underside, that supply lines for the signal voltage are preferably located on the printed circuit board (8), the second electrical connections (20, 21) optionally being able to contact the supply lines, further that the second electrical connections (20, 21) are preferably electrically coupled to the contact system (9) by a board (22) located in the switch (2), further that the switching signals generated, by the switch (2) by means of the signal voltage supplied and according to the switched position of the contact system (9) can preferably be transmitted to a control circuit (33) located on the printed circuit board (8), and still further that the switching signals in the control circuit (33) can preferably be converted to bus signals, especially CAN bus signals, which can be transmitted by the control circuit (33) to a bus line (47).

4. An electric switch according to claim 1, 2 or 3, **characterised in that** a support (25) is located at one side, particularly the underside of the casing (5), and includes the first electrical connections (16, 17, 18) in such a way that a plug (26) for supplying the power voltage can optionally be plugged on, that the support (25) is preferably in the central part of the casing (5), and further that an opening (27) corresponding to the support (25) is preferably located in the printed circuit board (8), its shape and size allowing the plug (26) to be passed through it.

5. An electric switch according to any of claims 1 to 4, **characterised in that** the second electrical connections (20, 21) are located at the support (25) side of the casing (5), particularly assigned to the edge of the casing (5) and adjacent to the support (25), that the second electrical connections (20, 21) are preferably in the form of plug-in supports (63) which are possibly arranged in the casing (5) in the manner of a floating bearing or locked attachment with electrical coupling lines (60) to the board (22), in such a way that the second electrical connections (20, 21) can be plugged onto associated plug-on contacts (28, 29) located for example on the board (8).

6. An electric switch according to any of claims 1 to 5, **characterised in that** at least one resilient latching arm (6) is arranged on the casing (5), so that the switch (2) can be plugged with a clamping and/or locking action into a carrier component (3) which in particular contains a plurality of switches (S1 to S9; 2) in a switch arrangement (1) for a control panel, that the switch (2) can preferably be unlocked and removed from the carrier component (3) by acting on the latching arm (6) by means of a tool (30), screw driver or the like, and further that the tool (30) preferably has an arm (31) corresponding to the latching arm (6) for unlocking the latching arm (6), and an attachment (32) adjoining the arm (31) for acting on the underside of the casing (5), in such a way that the switch (2) can be pressed out of the carrier component (3) at the side allocated to the underside of the casing (5).

7. An electric switch according to any of claims 1 to 6, **characterised in that** the contact system (9) is in the form of a snap-action system, in which in particular the actuating member (7) acts on a bearing arm (15) by means of an attachment (19), the bearing arm (15) is mounted movably on a connecting member (57), the switching contact (10) is again mounted movably in a knife-edge bearing (14) on the bearing arm (15), and a tension spring (13) is fixed in the casing (5) at one side and hooked into the switching contact (10) at the other, so that the switching contact (10) interacts in its switching at least with one stationary contact (12) located on a further connecting member (59), possibly switching over between two stationary contacts (11, 12) in the manner of a change-over contact, that the connecting members (57, 85, 59) preferably extend into the first electrical connections (16, 17, 18) with an elongation at one side, further that at least one connecting member (57, 59) preferably leads to the board (22) for electrical coupling with the second electrical connections (20, 21) with an elongation at the other side, and still further that at least one light-emitting diode (61, 62) or the like associated with the actuating member (7) is arranged on that member (7) to illuminate the function and/or symbol, preferably on the board (22), the voltage for operation of the light-emitting diode (61, 62) being supplied in particular through the second electrical connections (20,21).

8. An electric switch according to any of claims 1 to 7, **characterised in that** the contact system (9) is structured firstly so that it contains a contact material suitable for power currents and secondly so that it has low electrical contact resistance, particularly through the contact-making parts of the system (9) such as the switching contact (10) and the stationary contact (11, 12) being provided with a layer with good electro-conductivity, for example a layer of gold or the like, so that when the switch (2) is used for switching signal currents only a small voltage drop occurs in the contact system (9), and when it is used for switching power currents that layer may possibly be destroyed or eroded with an increase in the voltage drop in the contact system (9).

9. A switch arrangement for switching and/or initiating functions, for example for a control panel (44) in a motor vehicle, with a plurality of switches (S1 to S9; 2) constructed according to any of the preceding claims, comprising a control circuit (33), signal lines (34) from the control circuit (33) to the switches (S1 to S9; 2) for transmitting signals between the control circuit (33) and the switches (S1 to S9; 2), and a memory (35), an assignment being stored in the memory (35) and assigning to each individual switch (S1 to S9; 2) one of a number of functions which has to be switched by the respective switch or/and initiated by the control circuit (33).

10. A switch arrangement according to claim 9, **characterised in that** for commissioning of the control panel (44) and/or before the vehicle is commissioned, the control panel (44) may be initialised by storing the assignment, particularly a truth table, in the memory (35), that the control circuit (33) preferably contains a processor with operation of the control circuit (33) in particular being monitored by means of an external window watchdog module (42), further that the control circuit (33) is preferably provided with a voltage control module (43) designed particularly for requirements in the commercial vehicle field, and still further that the control circuit (33) is preferably coupled to a bus (47), for example the CAN bus, particularly by means of a high-speed transmission module (40), and is possibly also coupled to an upstream interference suppression coil (41).

11. A switch arrangement according to claim 9 or 10, **characterised in that** the switched state of the respective switch (S1 to S9) can be ascertained by the control circuit (33) by means of the signals transmitted along signal lines (34), particularly through the control circuit (33) reading the signal lines (34) by a multiplex process using analog/digital converters (68), that the control circuit (33) checks which function has been chosen by referring to the assignment for an operated switch (S1 to S9) stored in the memory (35), that a bus signal encoding the respective function, particularly a CAN bus signal can preferably be generated in the control circuit (33), and further that the supply voltage to the electronic components such as the control circuit (33) or the like can preferably be switched into a sleep mode with reduced current requirement in order to minimise current consumption, and the signal voltage supply to the switches (S1 to S9) can be disconnected.

12. A switch arrangement according to claim 9, 10 or 11, **characterised in that** at least one switch (S1 to S9) has function and/or symbol illumination, that the assignment of the function and/or symbol illumination to the respective switch (S1 to S9) is preferably stored in the memory (35), further that the function and/or symbol illumination is preferably activated by the control circuit (33) through associated drivers (38, 39), particularly by means of shift register modules with integral drivers, and still further that the function and/or symbol illumination can preferably be dimmed when required by means of pulse-width modulation, and the dimming may for example be initiated by the control circuit (33) in accordance with a bus signal.

13. A switch arrangement according to any of claims 9 to 12, **characterised in that** the switch arrangement (1) comprises a plurality of independent control panels (44, 45, 46) each in the form of bus nodes, particularly CAN nodes, that each control panel (44, 45, 46) is initialised separately with a truth table, that the control panels (44, 45, 46) are connected to a bus line (47), and that the items of information about the switched states of the switches (S1 to S9) arranged in the respective control panel (44, 45, 46) are transmitted by the respective control panel (44, 45, 46) direct to the bus line (47).

14. A switch arrangement according to any of claims 9 to 12, **characterised in that** the switch arrangement (1) comprises a plurality of control panels (48, 49, 50) each in the form of bus nodes, particularly CAN nodes, one control panel (48) being an independent master bus node and the other control panels (49, 50) being slave bus nodes dependent on the master bus node and having only basic bus node functions, that only the master bus node (48) is. initialised with the truth table for all the control panels (48, 49, 50), that the slave bus nodes (49, 50) transmit the items of information about the switched states of the switches (S1 to S9) arranged in the respective control panel (49, 50) through the bus line (47) to the master bus node (48) without any knowledge of their function, and that the master bus node (48) converts the items of information received from the slave bus nodes (49, 50) into bus signals in accordance with the truth table then transmits them to the bus line (47).

15. A switch arrangement according to any of claims 9 to 12, **characterised in that** the switch arrangement (1) comprises a plurality of control panels (51, 52, 53), one control panel (51) being an independent master bus node, particularly a CAN node, and the other control panels (52, 53) being slave control units dependent on the master bus node (51), that the control panels (51, 52, 53) each have a serial interface (54) and are connected to the master bus node (51) by a serial data line (55) via the serial interfaces (54), that only the master bus node (51) is initialised with the truth table for all the control panels (51, 52, 53), that the slave control units (52, 53) transmit the information about the switched states of the switches (S1 to S9) arranged in the respective control panel (52, 53) through the serial interface (54) and the serial data line (55) to the master bus node (51) without knowledge of their function, and that the master bus node (51) converts the item of information received from the slave control units (52, 53) into bus signals in accordance with the truth table, then transmits them to the bus line (47).

## Revendications

1. Commutateur électrique, en particulier pour un véhicule automobile, comportant un système de contact (9), constitué d'au moins un contact fixe (11, 12) et d'un contact de commutation (10), qui est prévu pour commuter un courant de puissance élevé ainsi qu'un courant de signal faible, et des raccords électriques menant au système de contact (9),
**caractérisé en ce que** les raccords électriques sont constitués de premiers raccords électriques (16, 17, 18) pour l'application d'une première tension à la manière d'une tension de puissance pour un courant de puissance élevé et de seconds raccords électriques (20, 21) pour appliquer une seconde tension à la manière d'une tension de signal pour un courant de signal faible, les premiers raccords électriques (16, 17, 18) et les seconds raccords électriques (20, 21) étant en liaison électrique avec uniquement le système de contact (9), de sorte que, au choix, en cas de besoin, un raccord permet l'amenée du courant de puissance par l'intermédiaire des premiers raccords électriques (16, 17, 18) et/ou du courant de signal par l'intermédiaire des seconds raccords électriques (20, 21) au système de contact.

2. Commutateur électrique selon la revendication 1,
**caractérisé en ce que** le système de contact (9) se trouve dans un boîtier du commutateur (2), **en ce que** les raccords électriques (16, 17, 18, 20, 21) se trouvent sur le boîtier (5), en particulier sur son dessous, et **en ce que**, sur le boîtier (5), en particulier sur son dessus, il est agencé un organe d'actionnement (7), réalisé par exemple comme bascule, pour une action manuelle de commutation sur le système de contact (9), et **en ce que**, avantageusement, dans le boîtier (5), il est agencé un autre second système de contact (9), de sorte que, dans une première position de commutation actionnée de la bascule (7), le premier système de contact (9) se trouve dans un état de commutation connecté et, dans une seconde position actionnée de la bascule (7), le second système de contact (9) se trouve dans un état de commutation connecté.

3. Commutateur électrique selon la revendication 1 ou 2,
**caractérisé en ce que** le boîtier (5) est fixé, par un côté, en particulier par son dessous, sur une plaque conductrice (8), **en ce que**, avantageusement, sur la plaque conductrice (8), se trouvent des conducteurs d'amenée pour la tension de signal, les seconds raccords électriques (20, 21) pouvant être mis en contact, au choix, avec les conducteurs d'amenée, **en ce que**, encore avantageusement, les seconds raccords électriques (20, 21) sont en liaison électrique, par l'intermédiaire d'une platine (22) se trouvant dans le commutateur (2), avec le système de contact (9), **en ce que**, encore plus avantageusement, les signaux de commutation engendrés au moyen de la tension de signal amenée ainsi que de façon correspondant à la position de commutation du système de contact (9) par le commutateur (2) peuvent être transmis à un circuit de commande (33) se trouvant sur la plaque conductrice (8), et **en ce que**, encore une fois plus avantageusement, les signaux de commutation peuvent être convertis dans le circuit de commande (33) en signaux de bus, en particulier en signaux de bus CAN, qui peuvent être transmis du circuit de commande (33) à une ligne de bus (47).

4. Commutateur électrique selon la revendication 1, 2 ou 3,
**caractérisé en ce que**, sur un côté, en particulier sur le dessous du boîtier (5), se trouve un récepteur (25) qui comporte les premiers raccords électriques (16, 17, 18), de sorte qu'un connecteur (26) pour l'amenée de la tension de puissance peut être enfiché au choix, **en ce que**, avantageusement, le récepteur (25) se trouve dans la zone médiane du boîtier (5), et **en ce que**, encore avantageusement, dans la plaque conductrice (8) se trouve une ouverture (27) correspondant au récepteur (25), dont la forme et la taille permettent le passage du connecteur (26).

5. Commutateur électrique selon une des revendications 1 à 4,
**caractérisé en ce que** les seconds raccords électriques (20, 21) se trouvent sur le côté, présentant le récepteur (25), du boîtier (5), en particulier en étant associés au bord du boîtier (5) ainsi que de façon voisine au récepteur (25), **en ce que**, avantageusement, les seconds raccords électriques (20, 21) sont réalisés comme récepteurs enfichables (63) qui, le cas échéant, sont agencés dans le boîtier (5) à la manière d'un montage flottant ou d'une fixation enclenchée avec des lignes de liaison électriques (60) vers la platine (22), de sorte que les seconds raccords électriques (20, 21) peuvent être enfichés sur des contacts d'enfichage associés (28, 29) qui se trouvent par exemple sur la plaque conductrice (8).

6. Commutateur électrique selon une des revendications 1 à 5,
**caractérisé en ce qu'**au moins un bras d'enclenchement élastique (6) est agencé sur le boîtier (5), de sorte que le commutateur (2) peut être enfiché, par serrage et/ou verrouillage, dans une pièce de support (3) qui comporte en particulier plusieurs commutateurs (S1 à S9 ; 2) dans un agencement de commutation (1) pour un tableau de commande, et **en ce que**, avantageusement, le commutateur (2) peut être déverrouillé par action au moyen d'un outil (30), tournevis ou analogue sur le bras d'enclenchement (6), ainsi que retiré de la pièce de support (3), l'outil (30), encore avantageusement, possédant un bras (31) correspondant au bras d'enclenchement (6) pour le déverrouillage du bras d'enclenchement (6) ainsi qu'une pièce rapportée (32) raccordée au bras (31) pour agir sur le dessous du boîtier (5), de sorte que le commutateur (2) peut être retiré par pressage de la partie de support (3) sur le côté associé au-dessous du boîtier (5).

7. Commutateur électrique selon une des revendications 1 à 6,
**caractérisé en ce que** le système de contact (9) est réalisé comme système à enclenchement, en particulier dans le cas du système à enclenchement, l'organe d'actionnement (7) agissant au moyen d'une pièce rapportée (19) sur un bras d'appui (15), le bras d'appui (15) étant monté de façon mobile sur une partie de raccordement (57), le contact de commutation (10) étant monté à son tour de façon mobile dans un couteau de répartition (14) sur le bras d'appui (15), et un ressort de traction (13) étant, d'une part, fixe dans le boîtier (5) et, d'autre part, suspendu dans le contact de commutation (10), de sorte que le contact de commutation (10) coopère, en connectant, au moins avec un contact fixe (12) se trouvant sur une autre partie de raccordement (59), commute, le cas échéant, entre deux contacts fixes (11, 12) à la manière d'un inverseur, **en ce que**, avantageusement, les parties de raccordement (57, 58, 59), en se prolongeant d'un côté, se convertissent en les premiers raccords électriques (16, 17, 18), **en ce que**, encore avantageusement, au moins une partie de raccordement (57, 59) en se prolongeant sur l'autre côté mène à la platine (22) pour la liaison électrique avec les seconds raccords électriques (20, 21), et **en ce que**, encore plus avantageusement, sur la platine (22), il est agencé au moins une diode lumineuse (61, 62) associée à l'organe d'actionnement (7) ou analogue pour l'éclairage de symboles et/ou fonctions sur l'organe d'actionnement (7), en particulier l'alimentation en tension pour le fonctionnement de la diode lumineuse (61, 62) étant effectuée par l'intermédiaire des seconds raccords électriques (20, 21).

8. Commutateur électrique selon une des revendications 1 à 7,
**caractérisé en ce que** le système de contact (9) est réalisé de sorte qu'il comporte, d'une part, une matière de contact appropriée pour des courants de puissance et possède, d'autre part, une faible résistance de transition électrique, en particulier **en ce que** les parties, fournissant le contact, du système de contact (9), comme le contact de commutation (10) et le contact fixe (11, 12), sont munies d'une couche électriquement bien conductrice, par exemple une couche d'or ou analogue, de sorte que, lors de l'utilisation du commutateur (2) pour commuter des courants de signal, uniquement une faible chute de tension apparaît sur le système de contact (9) et, lors de l'utilisation du commutateur (2) pour commuter des courants de puissance, il se produit, le cas échéant, une destruction ou abrasion de cette couche lorsque la chute de tension sur le système de contact (9) augmente.

9. Agencement de commutation pour commuter et/ou pour déclencher des fonctions, par exemple pour un tableau de commande (44) dans un véhicule automobile, comportant plusieurs commutateurs (S1 à S9 ; 2), qui sont réalisés selon une des revendications précédentes, un circuit de commande (33), des lignes de signal (34) du circuit de commande (33) aux commutateurs (S1 à S9 ; 2) pour transmettre des signaux entre le circuit de commande (33) et les commutateurs (S1 à S9 ; 2), et une mémoire (35), une association étant prévue dans la mémoire (35), qui associe, à chaque commutateur individuel (S1 à S9 ; 2), une fonction à commuter par le commutateur respectif et/ou à déclencher par le circuit de commande (33) à partir d'une pluralité de fonctions.

10. Agencement de commutation selon la revendication 9,
**caractérisé en ce que**, pour la mise en service du tableau de commande (44) et/ou pour la mise en service du véhicule automobile, le tableau de commande (44) peut être initialisé en prévoyant l'association, en particulier une table d'association, dans la mémoire (35), **en ce que**, avantageusement, le circuit de commande (33) comporte un processeur, en particulier le fonctionnement du circuit de commande (33) étant surveillé au moyen d'un bloc fonctionnel (42) "chien de garde" à fenêtre externe, **en ce que**, encore avantageusement, le circuit de commande (33) est muni d'un sous-ensemble de régulation de tension (43) qui, en particulier, est adapté aux exigences dans le domaine d'utilisation du véhicule, et **en ce que**, encore plus avantageusement, le circuit de commande (33) est couplé à un bus (47), pour lequel il s'agit par exemple du bus CAN, en particulier au moyen d'un bloc fonctionnel (40) de transmission à vitesse élevée, ainsi que, le cas échéant, un filtre d'anti-parasitage (41) prévu en amont.

11. Agencement de commutation selon la revendication 9 ou 10,
**caractérisé en ce que** l'état de commutation du commutateur respectif (S1 à S9) peut être déterminé par le circuit de commande (33) en référence aux signaux transmis sur les lignes de signal (34), en particulier **en ce que** le circuit de commande (33) lit les lignes de signal (34) au moyen d'un procédé multiplex par l'intermédiaire d'un convertisseur analogique/numérique (68), **en ce que**, en référence à l'association, prévue dans la mémoire (35), pour un commutateur actionné (S1 à S9), il est vérifié, dans le circuit de commande (33), quelle fonction est choisie, **en ce que**, avantageusement, dans le circuit de commande (33), un signal de bus codant la fonction respective, en particulier un signal de bus CAN, peut être engendré, et **en ce que**, encore avantageusement, la tension d'alimentation pour les pièces électroniques, comme le circuit de commande (33) ou analogue, pour minimiser la consommation de courant, peut être commutée dans un mode de "sommeil" avec un besoin de courant diminué, et l'alimentation en tension de signal pour les commutateurs (S1 à S9) peut être coupée.

12. Agencement de commutation selon la revendication 9, 10 ou 11,
**caractérisé en ce qu'**au moins un commutateur (S1 à S9) possède un éclairage de fonctions et/ou de symboles, **en ce que**, avantageusement, dans la mémoire (35), l'association de l'éclairage de fonctions et/ou de symboles au commutateur respectif (S1 à S9) est prévue, **en ce que**, encore avantageusement, l'éclairage de fonctions et/ou de symboles peut être commandé par le circuit de commande (33) par l'intermédiaire de circuits d'attaque associés (38, 39), en particulier au moyen de blocs fonctionnels de registre à décalage ayant des circuits d'attaque intégrés, et **en ce que**, encore plus avantageusement, l'éclairage de fonctions et/ou de symboles peut varier, en cas de besoin, au moyen d'une modulation de largeur d'impulsion, la variation pouvant être par exemple déclenchée de façon correspondant à un signal de bus par le circuit de commande (33).

13. Agencement de commutation selon une des revendications 9 à 12,
**caractérisé en ce que** l'agencement de commutation (1) est constitué de plusieurs tableaux de commande (44, 45, 46) réalisés indépendamment les uns des autres et, à chaque fois, comme noeud de bus, en particulier noeud CAN, **en ce que** chaque tableau de commande (44, 45, 46) est initialisé de façon séparée avec une table d'association, **en ce que** les tableaux de commande (44, 45, 46) sont raccordés à une ligne de bus (47), et **en ce que** les informations relatives aux états de commutation des commutateurs (S1 à S9) agencés dans le tableau de commande respectif (44, 45, 46) sont transmises du tableau de commande respectif (44, 45, 46) directement à la ligne de bus (47).

14. Agencement de commutation selon une des revendications 9 à 12,
**caractérisé en ce que** l'agencement de commutation (1) est constitué de plusieurs tableaux de commande (48, 49, 50) réalisés à chaque fois comme noeud de bus, en particulier noeud CAN, un tableau de commande (48) étant réalisé comme noeud de bus maître indépendant et les autres tableaux de commande (49, 50) comme noeuds de bus asservis dépendant du noeud de bus maître, qui possèdent simplement des fonctions basiques d'un noeud de bus, **en ce qu'**uniquement le noeud de bus maître (48) est initialisé avec la table d'association pour tous les tableaux de commande (48, 49, 50), **en ce que** les noeuds de bus asservis (49, 50) transmettent les informations relatives aux états de commutation des commutateurs (S1 à S9) agencés dans le tableau de commande respectif (49, 50) sans connaissance de leur fonction par l'intermédiaire de la ligne de bus (47) au noeud de bus maître (48), et **en ce que** le noeud de bus maître (48) transforme les informations reçues par les noeuds de bus asservis (49, 50), de façon correspondant à la table d'association, en signaux de bus et, ensuite, les transmet à la ligne de bus (47).

15. Agencement de commutation selon une des revendications 9 à 12,
**caractérisé en ce que** l'agencement de commutation (1) est constitué de plusieurs tableaux de commande (51, 52, 53), un tableau de commande (51) étant réalisé comme noeud de bus maître indépendant, en particulier noeud CAN, et les autres tableaux de commande (52, 53) comme appareils de commande asservis dépendant du noeud de bus maître (51), **en ce que** les tableaux de commande (51, 52, 53) possèdent, à chaque fois, une interface sérielle (54) et sont reliés, au moyen d'une ligne de données sérielle (55), par l'intermédiaire des interfaces sérielles (54), au noeud de bus maître (51), **en ce qu'**uniquement le noeud de bus maître (51) est initialisé par la table d'association pour tous les tableaux de commande (51, 52, 53), **en ce que** les appareils de commande asservis (52, 53) transmettent les informations relatives aux états de commutation des commutateurs (S1 à S9) agencés dans le tableau de commande respectif (52, 53) sans connaissance de leur fonction par l'intermédiaire de l'interface sérielle (54) et de la ligne de données sérielle (55) au noeud de bus maître (51), et **en ce que** le noeud de bus maître (51) transforme les informations reçues par les appareils de commande asservis (52, 53) de façon correspondant à la table d'association en signaux de bus et, ensuite, les transmet à la ligne de bus (47).
